# EUROPÄISCHE PATENTSCHRIFT

(11) **EP 2 444 765 B1**
(45) Veröffentlichungstag und Bekanntmachung des Hinweises auf die Patenterteilung: **05.12.2018**
(21) Anmeldenummer: 11008325.0
(22) Anmeldetag: 14.10.2011
(51) Int. Cl.: F25D 29/00, H02J 3/38, H02J 3/14, F25B 27/00

(54) **System umfassend wenigstens ein Kühl-und/oder Gefriergerät**
System comprising at least one refrigeration and/or freezer device
Système comprenant au moins un appareil de refroidissement et/ou de congélation

(30) Priorität: 20.10.2010 DE 102010048972; 23.12.2010 DE 102010055903
(43) Veröffentlichungstag der Anmeldung: 25.04.2012
(73) Patentinhaber: Liebherr-Hausgeräte Ochsenhausen GmbH, 88416 Ochsenhausen (DE)
(72) Erfinder: Ertel, Thomas, Dipl.-Ing., 88299 Leutkirch (DE); Schick, Michael, Dipl.-Phys. oec., 88480 Stetten (DE)
(74) Vertreter: Zinnecker, Armin

(56) Entgegenhaltungen:
- EP-A2- 2 221 756
- WO-A2-2007/136579
- DE-A1- 10 062 027
- DE-U1-202009 007 114

## Beschreibung

Die vorliegende Erfindung betrifft ein System umfassend wenigstens ein Kühl- und/oder Gefriergerät.

Aus dem Stand der Technik ist es bereits seit längerem bekannt, eine dezentrale Energieerzeugung, beispielsweise über Photovoltaikanlagen oder mittels Kraftwärmekopplung vorzunehmen. Dabei kann der auf diese Weise erzeugte Strom unmittelbar im Haushalt verbraucht werden, wodurch das Netz nicht belastet wird. Ebenso ist es gängige Praxis, den im Haushalt zwar erzeugten, jedoch nicht verbrauchten Strom in das Netz einzuspeisen.

DE 100 62 027 A1 offenbart ein System umfassend Mittel zur Erzeugung von Energie, ein Kühl- und/oder Gefriergerät sowie eine Steuereinheit mit allen Merkmalen des Oberbegriffs des Anspruchs 1.

Der vorliegenden Erfindung liegt die Aufgabe zugrunde, ein System der eingangs genannten Art in vorteilhafter Weise weiterzubilden.

Diese Aufgabe wird durch ein System mit den Merkmalen des Anspruchs 1 gelöst. Das erfindungsgemäße System umfasst neben wenigstens einem Kühl- und/oder Gefriergerät Mittel zur Erzeugung von Energie in einem Haushalt sowie wenigstens eine Steuereinheit, die mit dem Kühl- und/oder Gefriergerät drahtlos oder drahtgebunden oder in sonstiger Weise in Verbindung steht oder verbindbar ist. Die Steuereinheit ist dabei so ausgeführt, dass sie die Information enthält, ob und/oder in welchem Umfang im Haushalt selbst erzeugte Energie zum Betrieb des Kühl- und/oder Gefriergerätes zur Verfügung steht, und basierend darauf wenigstens ein diese Information enthaltenes oder auf dieser Information basierendes Signal an das Kühl- und/oder Gefriergerät übermittelt. Davon ist auch der Fall umfasst, dass das Kühl- und/oder Gefriergerät selbst die Information abfragt. Das Kühl- und/oder Gefriergerät ist seinerseits so ausgeführt, dass es seine Energieaufnahme, in Abhängigkeit von diesem Signal einstellt.

Der vorliegenden Erfindung liegt somit der Gedanke zugrunde, in einem Haushalt, beispielsweise über eine Photovoltaikanlage oder auf sonstige Weise erzeugte Energie bzw. Strom in vorteilhafter Art und Weise zum Betrieb eines Kühl- und/oder Gefriergerätes zu nutzen, das heißt in Form von Kälte zu speichern.

Die Speicherung von Energie ist stets mit einem bestimmten Verlust verbunden, der Wirkungsgrad von Energiespeichern ist in der Regel deutlich kleiner als 100 %. Kühl- und/oder Gefriergeräte bieten hier wesentliche Vorteile, da bei der Speicherung von Kälte in einem gewissen Rahmen noch sehr hohe Wirkungsgrade mit nahezu 100 % erzielt werden können. Kühl- und/oder Gefriergeräte, die in dieses erfindungsgemäße System bzw. Hausnetz integriert sind und mit ihm in der dargestellten Weise kommunizieren können, können dazu beitragen, das einzelne Hausnetz und auch das gesamte Stromnetz effizient und für den Kunden kostengünstig zu betreiben, wodurch nicht zuletzt auch im Hinblick auf den Umweltschutz positive Aspekte entstehen.

Bei der dezentralen Energieversorgung, z. B. mit Photovoltaik oder Kraftwärmekopplung hängt heute die Vergütung auch von selbstverbrauchtem Strom ab. Da durch direkten Verbrauch des erzeugten Stromes das Netz nicht belastet wird, wird hierfür eine höhere Vergütung bezahlt. Auch vor diesem Hintergrund ist es für einen Nutzer vorteilhaft, in seinem Hausnetz selbst erzeugte Energie zu verbrauchen oder in einem Energiespeicher (Hydrolyseur, Akkumulator, ...) zu speichern. Von der Erfindung ist also der Fall umfasst, dass die in dem Haushalt erzeugte Energie unmittelbar zum Betrieb eines Kühl- und/oder Gefriergerätes genutzt wird, so wie auch der Fall, dass die selbsterzeugte Energie zunächst gespeichert wird und die gespeicherte Energie zum Betrieb des Kühl- und Gefriergerätes genutzt wird.

Somit ist es denkbar und von der Erfindung mitumfasst, wenn das System wenigstens einen Speicher zur Speicherung der erzeugten Energie aufweist und dass die Steuereinheit derart ausgeführt ist, dass sie die Information enthält, ob und/oder in welcher Menge Energie in dem Speicher vorhanden ist.

Dieser Speicher kann über ein zentrales Energiemanagement, das den Energieverbrauch des Haushaltes steuert, in das Stromnetz eingebunden sein. Je nach Vorgabe der Bewohner des Haushaltes könnte ein solches Energiemanagement den Energieverbrauch energetisch, betriebswirtschaftlich, hinsichtlich minimalen CO₂-Ausstoßes oder maximaler Nutzung regenerativer Energien optimieren.

Die Steuerung der Energieströme vom Stromnetz in den Haushalt und zurück, wie auch die Ströme im Haus selbst könnten jeweils durch ein Energiesignal erfolgen, wie dies aus der DE 10 2009 033 642.7 bekannt ist, auf die insoweit Bezug genommen wird. Für die Steuerung der Vorgänge im Haushalt kann dieses Energiesignal vom zentralen Energiemanagement erzeugt werden, gegebenenfalls in Abhängigkeit von einem vom Energieerzeuger erhaltenen Signal.

Ist der Speicher mit selbst erzeugter, vorzugsweise erneuerbarer Energie "gefüllt", wird dies dem Kühl- und/oder Gefriergerät signalisiert werden, wodurch ein entsprechender Betriebsmodus eingestellt wird, in dem die Energieaufnahme des Kühl- und/oder Gefriergerätes steigt. Wird demgegenüber signalisiert, dass dies nicht der Fall ist, d. h. dass der Speicher nicht gefüllt ist bzw. nur unterhalb einem bestimmten Level, wird dies ebenfalls dem Kühl- und/oder Gefriergerät signalisiert werden und die Energieaufnahme wird verringert oder auf dem bisherigen Niveau verbleiben.

Ein weiterer Vorteil eines solchen dezentralen, vorzugsweise im Haushalt aufgestellten Speichers bzw. durch den gezielt gesteuerten lokalen Verbrauch von elektrischer Energie können die übertragenen Lasten im Stromnetz erheblich reduziert werden, da das Stromnetz in dem Umfang des Verbrauchs der selbst erzeugten Energie nicht oder nur in untergeordnetem Umfang belastet wird, wie dies oben ausgeführt wurde. Es tritt somit eine Entlastung des Stromnetzes ein.

Wie ausgeführt, können diese bzw. dieser Speicher in Zukunft in Haushalten aufgestellt werden. Denkbar wäre es, dass der Kunde als Betreiber dieses Speichers von Energieversorgern eine Vergünstigung für die Bereitstellung der Speicherkapazität erhält oder auch kostengünstig überschüssige Energie.

Wie ausgeführt, sind von der Erfindung somit beide Varianten umfasst, nämlich einerseits die, dass der Nutzer selbst erzeugte Energie unmittelbar verbraucht und/oder die Variante, dass die Energie in einem Energiespeicher (Hydrolyseur, Akkumulator etc.) gespeichert wird.

Dieser Speicher kann über ein zentrales Energiemanagement, das den Energieverbrauch des Haushaltes steuert, in das Stromnetz eingebunden sein. Je nach Vorgabe der Bewohner des Haushaltes könnte ein solches Energiemanagement den Energieverbrauch energetisch, betriebswirtschaftlich, hinsichtlich des Minimal-CO₂-Ausstoßes oder der maximalen Nutzung regenerative Energien optimieren.

Gemäß der Erfindung ist vorgesehen, dass das Gerät seine Energieaufnahme steigert, wenn selbst erzeugte Energie überhaupt oder oberhalb einer bestimmten Menge zur Verfügung steht, und/oder seine Energieaufnahme verringert, wenn selbst erzeugte Energie nicht oder nur unterhalb eines bestimmten Wertes zur Verfügung steht.

Es ist gemäß der Erfindung vorgesehen, dass das Gerät somit sein Verhalten so anpaßt, dass die Energieaufnahme steigt, wenn momentan im Haushalt erzeugte Energie zur Verfügung steht. Dann ist es sinnvoll, diese Energie selbst zu verbrauchen. Dies kann durch eine Steigerung der Energieaufnahme erfolgen, wobei die elektrische Energie in einem Energiespeicher, wie z. B. einem Akkumulator oder in Form von Kälte gespeichert wird.

Wie ausgeführt, wird dem Kühl- und/oder Gefriergerät die Information zur Verfügung gestellt, dass überschüssige bzw. fehlende selbsterzeugte Energie vorhanden ist. Diese Signalisierung kann z. B. durch Ausgestaltung des Signals mit mehreren Stufen oder durch ein kontinuierliches Signal erfolgen, wobei die Abstufung bzw. der Wert des kontinuierlichen Signals von der Menge der zur Verfügung stehenden Energie abhängen kann.

Das Signal an das Kühl- und/oder Gefriergerät kann über eine Datenverbindung von einer zentralen Steuereinheit im Haushalt stammen.

Die Steuereinheit kann durch eine zentrale Steuereinheit oder auch durch die Steuerung bzw. Regelung der Energieerzeugung oder des Energiespeichers (Wechselrichter der Photovoltaikanlage, Steuerung der KWK-Anlage, Regelung dezentraler Energiespeicher wie Akkumulatoren etc.) im Haus oder auch im Wohnkomplex, im Straßenzug etc. gebildet werden. Auch der Einsatz mehrerer Steuereinheiten ist denkbar und von der Erfindung mitumfasst.

Unabhängig von der konkreten Aufstellposition der Steuereinheit hat diese die Aufgabe, ein Signal zu erzeugen oder bereitzustellen, anhand dessen das oder die Kühl- und/oder Gefriergeräte bei Bedarf elektrische Energie aufnehmen und in Form von thermischer Energie als Kälte speichern.

Ebenso ist es denkbar, dass dem Gerät über eine Datenverbindung signalisiert wird, dass momentan keine oder relativ wenig selbst erzeugte Energie zur Verfügung steht. Um keinen Strom zukaufen zu müssen, wechselt das Gerät in einen stromsparenden Betriebsmodus bzw. verbraucht gegebenenfalls eine angelegte Kältereserve.

Wie eingangs ausgeführt, kann die Datenverbindung zwischen der Steuereinheit und dem Kühl- und/oder Gefriergerät drahtgebunden (ETHERNET, USB, serielle Schnittstelle, Powerline, EIB, KNX etc.) oder auch drahtlos beispielsweise mittels W-LAN, ZigBee, Bluetooth etc. ausgeführt sein.

Das Gerät kann so ausgeführt sein, dass es seine Energieaufnahme durch Absenkung des Einschaltwertes und/oder des Ausschaltwertes erhöht und/oder so, dass es durch Erhöhung des Einschaltwertes und/oder des Ausschaltwertes seine Energieaufnahme verringert.

Das Ausmaß der Absenkung und/oder der Erhöhung kann vorbestimmt sein oder von der Art und/oder von dem Wert des Signals abhängen. So ist es beispielsweise denkbar, dass die Höhe der Absenkung und/oder der Erhöhung im Parametersatz der Geräteregelung oder an anderer Stelle hinterlegt ist. Sie kann auch von dem Wert oder der Art des eingegangen Signals abhängen.

Tritt eine länger andauernde Kältespeicherung ein, wird der Wirkungsgrad des Gerätes schlechter. Daher ist es denkbar, dass die Absenkung der Schaltwerte sukzessive reduziert wird, das heißt, dass das Ausmaß der Absenkung mit der Zeit, das heißt von Stufe zu Stufe kleiner wird. Die Geschwindigkeit dieser Reduktion kann vorbestimmt sein, sie kann beispielsweise im Parametersatz der Geräteregelung hinterlegt sein.

Steht umgekehrt keine selbst erzeugte Energie zur Verfügung oder nur vergleichsweise wenig selbst erzeugte Energie, kann nach erfolgter Kältespeicherung durch Erhöhung der Schaltwerte die gespeicherte Kälte langsam aufgebraucht werden bzw. für eine gewisse Zeit die Stromaufnahme gesenkt werden.

Auch hier gilt, dass die Höhe der Erhöhung des oder der Schaltwerte im Parametersatz der Geräteregelung hinterlegt sein kann bzw. vorbestimmt sein kann. Auch sie kann jedoch auch von dem Wert des eingegangenen Signals abhängen.

Bei länger andauernder Erhöhung der Schaltwerte steigt die Temperatur im Gerät an. Diese Erhöhung der Schaltwerte muss daher sukzessive reduziert werden. Die Geschwindigkeit dieser Reduktion kann ebenfalls vorbestimmt sein, beispielsweise kann sie im Parametersatz der Geräteregelung hinterlegt sein.

In bevorzugter Ausgestaltung der Erfindung ist vorgesehen, dass die Werte jeweils so gewählt werden, dass die im Gerät vorgegebenen wärmsten Einschaltwerte und kältesten Ausschaltwerte nicht überschritten werden, um die Temperatur innerhalb einer vorbestimmten Bandbreite zu halten.

Denkbar ist es weiterhin, dass Mittel vorgesehen sind, anhand derer die Menge der gespeicherten Kälte anhand der Dauer der Kältespeicherung ermittelt wird.

Es ist nun denkbar, die Erhöhung der Einschaltwerte beim Verbrauch der gespeicherten Kälte, wenn wenig oder keine selbst erzeugte Energie zur Verfügung steht, anhand der gespeicherten Kälte zu berechnen.

Weiterhin kann vorgesehen sein, dass das Gerät derart ausgeführt ist, dass es eine Erhöhung der Energieaufnahme durch eine vorzugsweise zeitgesteuerte Betriebsweise des Kälteaggregates des Gerätes mit einer anschließenden vorzugsweise zeitgesteuerten Ruhephase umsetzt. Dabei kann vorzugsweise vorgesehen sein, dass die Dauer der Ruhephase anhand der gespeicherten Kältemenge bestimmt wird.

Die maximale Dauer der Betriebs- und Ruhephasen bzw. die Dauer in Abhängigkeit von der Signalstufe kann vorbestimmt sein, beispielsweise kann sie im Parametersatz der Geräteregelung hinterlegt sein.

Die Dauer einer Ruhephase kann aus der gespeicherten Kältemenge berechnet werden.

In weiterer Ausgestaltung der Erfindung ist vorgesehen, dass über geeignete Anzeigemittel oder sonstige Ausgabemittel das Vorhandensein von überschüssiger bzw. fehlender selbst erzeugter Energie signalisiert wird. Diese Signalisierung kann durch Ausgestaltung des Signals in mehreren Stufen oder auch durch ein kontinuierliches Signal erfolgen.

Des Weiteren kann ein Display oder eine Kontrollleuchte oder dergleichen, vorzugsweise am Gerät selbst vorhanden sein, das als Symbol oder im Klartext ausgeführt ist oder in einer graphischen und/oder akustischen Form den momentanen Betriebsstatus, den Wert des erhaltenen Signals oder weitere daraus abgeleitete Größen anzeigt.

In vorteilhafter Ausgestaltung der Erfindung ist vorgesehen, dass die Kommunikation zwischen dem Kühl- und/oder Gefriergerät und der Steuereinheit bzw. der zentralen Steuereinheit ausschließlich oder auch zumindest zeitweise bidirektional erfolgt.

Vorzugsweise ist vorgesehen, dass das Kühl- und/oder Gefriergerät der Steuereinheit zurückmeldet, wann und/oder wenn nur eingeschränkte oder gar keine Reaktionen auf empfangene Signale möglich sind.

Dies kann beispielsweise dann der Fall sein, wenn bei aktiviertem Superfrost-Modus ein erhöhter Leistungsbedarf an die Steuereinheit gemeldet wird, der bei der Ansteuerung von regelbaren Energieerzeugern (KWK oder dergleichen) berücksichtigt wird.

Erfindungsgemäß ist es in bevorzugter Ausgestaltung somit möglich, dass das Kühl- und/oder Gefriergerät der Steuereinheit zurückmeldet, wann bzw. wenn nur eingeschränkte oder gar keine Reaktionen auf empfangene Signale möglich sind.

Denkbar ist es, den Verbindungsstatus zur Signalquelle, den Wert des eingehenden Signals, die Energiekosten oder die Kosteneinsparung durch den optimierten Betrieb sowie den CO₂-Ausstoss oder die CO₂-Einsparung durch den optimierten Betrieb anzuzeigen oder auf sonstige Weise ausgeben zu lassen.

Denkbar ist es, dass die Werte absolut beispielsweise auf einer mehrstufigen Skala oder auch prozentual dargestellt werden oder in einer sonstigen graphischen und/oder akustischen Form.

Bei Ausgestaltung der Anzeige mit einem Symbol ist es denkbar, den Betriebsstatus durch dauerhafte An- und Abschaltung des Symbols bzw. der Kontrollleuchte oder Blinken, eventuell mit verschiedenen Frequenzen anzuzeigen.

Weitere Einzelheiten und Vorteile der Erfindung werden anhand eines im Folgenden beschriebenen Ausführungsbeispiels näher beschrieben.

Das vorliegende Ausführungsbeispiel betrifft einen Haushalt bzw. ein Gebäude, das mit Mitteln zur autarken Energieversorgung aufgrund erneuerbarer Energien ausgestaltet ist. An dieser Stelle sei darauf hingewiesen, dass der Begriff "Haushalt" im Rahmen der vorliegenden Erfindung weit zu fassen ist und nicht nur einen Personenhaushalt im engeren Sinne umfasst, sondern jedes beliebige Gebäude oder einen Gebäudekomplex, der gegebenenfalls auch für gewerbliche Zwecke, etc. genutzt wird. Die Mittel zur autarken Energieversorgung können beispielsweise in Form von Solarmodulen oder Photovoltaikmodulen ausgeführt sein. Die auf diese Weise gewonnene Energie kann in einem Speicher des Gebäudes gespeichert werden, d. h. in einem Speicher, der nicht zentral, sondern dezentral im Gebäude selbst angeordnet ist.

In dem Gebäude bzw. in dem Haushalt befindet sich des Weiteren wenigstens ein Kühl- und/oder Gefriergerät, das dazu in der Lage ist, seinen Energiehaushalt einzustellen bzw. das dazu in der Lage ist, die Energiespeicherung und den Energieverbrauch in geeigneter Weise zu wählen.

Steht momentan im Haushalt erzeugte Energie zur Verfügung, kann dies einer Steuereinheit gemeldet werden, die zentral im Haus oder auch dezentral für mehrere Häuser angeordnet bzw. vorgesehen ist. Diese Steuereinheit signalisiert sodann dem Kühl- und/oder Gefriergerät, dass selbst erzeugte Energie zur Verfügung steht und veranlaßt dieses, einen ersten Betriebsmodus zu wählen, in dem die Energieaufnahme des Gerätes gesteigert oder begonnen wird, d. h. die Einschalt- und/oder Ausschaltwerte werden reduziert und die Kühlleistung des Gerätes wird erhöht.

Die Höhe der Absenkung des Einschaltwertes und/oder des Ausschaltwertes des Kälteaggregates kann vorgegeben sein oder auch von dem Wert des eingegangenen Signals abhängen.

Wird beispielsweise signalisiert, dass nur vergleichsweise wenig selbst erzeugte Energie zur Verfügung steht, ist eine vergleichsweise geringe Absenkung des Einschalt- und/oder des Ausschaltwertes denkbar. Liegt demgegenüber eine vergleichsweise große Menge selbst erzeugte Energie vor, so kann eine größere Absenkung vorgenommen werden.

Um eine Verschlechterung des Wirkungsgrades bei länger andauernder Kältespeicherung zu vermeiden, ist es denkbar, die Absenkung der Schaltwerte nicht gleich groß zu gestalten, sondern schrittweise und sukzessive zu reduzieren. So kann bei länger andauerndem Vorliegen überschüssiger Energie eine immer kleinere Absenkung des Einschaltwertes und/oder des Ausschaltwertes vorgenommen werden.

Tritt der umgekehrte Fall ein, dass über eine Steuereinheit dem Gerät signalisiert wird, dass keine oder nur wenig selbst erzeugte Energie zur Verfügung steht, schaltet das Gerät in einen zweiten Betriebsmodus, der stromsparend ausgeführt ist bzw. es verbraucht eine selbst angelegte Kältereserve. Alternativ oder gleichzeitig dazu kann vorgesehen sein, dass eine Erhöhung des Einschaltwertes und/oder des Ausschaltwertes vorgenommen wird, was zur Folge hat, dass die gespeicherte Kälteenergie langsam aufgebraucht wird, was es ermöglicht, für eine gewisse Zeit die Stromaufnahme zu senken oder vorübergehend überhaupt keinen Strom aufzunehmen.

Die Höhe der Erhöhung kann ebenfalls fest vorgegeben sein oder auch von dem Wert des eingegangenen Signals abhängen.

Denkbar ist es, die Erhöhung um so kleiner zu gestalten je größer noch der vorliegende Vorrat an selbst erzeugter Energie ist.

Da bei länger andauernder Erhöhung der Schaltwerte selbstverständlich die Temperatur im gekühlten Innenraum ansteigt, kann ebenfalls vorgesehen sein, diese sukzessive zu reduzieren, d. h. die Erhöhung des oder der Schaltwerte schrittweise zu verkleinern. Die Geschwindigkeit dieser Reduktion kann fest vorgegeben sein.

In beiden Fällen (Energiespeicher und Energieverbrauch) kann vorgesehen sein, dass die im Gerät vorgegebenen wärmsten Einschaltwerte und kältesten Ausschaltwerte zu keinem Zeitpunkt überschritten werden.

Denkbar ist es, die Erhöhung der Schaltwerte beim Verbrauch in Abhängigkeit davon zu wählen, wieviel Kälte gespeichert wurde. Dies kann anhand der Dauer der Kältespeicherung berechnet werden.

Ebenso ist es denkbar, die Erhöhung der Energieaufnahme durch eine zeitgesteuerte Betriebsphase des Kälteaggregates mit einer anschließenden zeitgesteuerten Ruhephase umzusetzen. Die maximale Dauer der Betriebs- und Ruhephasen bzw. die Dauer in Abhängigkeit von der Signalstufe kann im Parametersatz der Gerätereglung hinterlegt werden. Die Dauer einer Ruhephase kann aus der ermittelten gespeicherten Kältemenge errechnet werden.

Es ist denkbar, das Gerät mit einem Display auszuführen, das das Vorhandensein von überschüssiger bzw. fehlender selbst erzeugter Energie anzeigt. Dies kann beispielsweise stufenweise, beispielsweise in Form eines Balken- oder Säulendiagramms erfolgen oder auch durch ein kontinuierliches Signal wie beispielsweise eine Linie etc.

Auch ist es denkbar, das Gerät so auszuführen, dass es über einen Display oder eine Kontrollleuchte mit einem Symbol oder auch im Klartext oder in einer graphischen oder sonstigen akustischen Form den momentanen Betriebsstatus, den Wert des seitens der Steuereinheit erhaltenen oder von dieser abgerufenen Signals oder weitere daraus abgeleitete Größen anzeigt. Als angezeigte Werte sind beispielsweise der Verbindungsstatus zur Signalquelle, der Wert des eingehenden Signals, die Energiekosten, die Kosteneinsparung, der CO₂-Ausstoß oder die CO₂-Einsparung etc. denkbar. Die Werte können entweder als Absolutzahlen z. B. auf einer mehrstufigen Skala oder auch prozentual dargestellt werden. Es ist eine beliebige graphische und/oder akustische Darstellung möglich.

Insgesamt ergibt sich durch die vorliegende Erfindung der Vorteil, dass Kühl- und/oder Gefriergeräte in die Haustechnik integriert werden können. Sie erhalten über eine Datenverbindung von einer vorzugsweise zentralen Steuereinheit oder auch von einer dezentralen Steuereinheit, worunter auch die Steuerung bzw. die Regelung der Energieerzeugung etc. im Haus zu verstehen ist, ein Signal, anhand dessen sie bei Bedarf elektrische Energie verbrauchen, das heißt aufnehmen und in Form von thermischer Energie als Kälte speichern können. Im Zusammenspiel mit der gesamten Haustechnik ergibt sich für den Kunden sowohl hinsichtlich der Kosteneffizienz als auch im Hinblick auf den Umweltschutz ein optimaler Betrieb des Kühl- und/oder Gefriergerätes.

## Patentansprüche

1. System, umfassend:
Mittel zur Erzeugung von Energie in einem Haushalt,
ein Kühl- und/oder Gefriergerät, sowie
eine Steuereinheit, die mit dem Kühl- und/oder Gefriergerät drahtlos oder drahtgebunden derart in Verbindung steht oder verbindbar ist, dass von der Steuereinheit ein Signal an das Kühl- und/oder Gefriergerät übertragbar ist, wobei
die Steuereinheit derart ausgeführt ist, dass mittels der Steuereinheit ein Signal an das Kühl- und/oder Gefriergerät übermittelbar ist,
**dadurch gekennzeichnet, dass**
das Signal die Information enthält, ob und/oder in welchem Umfang in dem Haushalt erzeugte Energie verfügbar ist,
das Kühl- und/oder Gefriergerät derart ausgeführt ist, dass es seine Energieaufnahme in Abhängigkeit von diesem Signal einstellt, und
das Kühl- und/oder Gefriergerät derart ausgeführt ist, dass es seine Energieaufnahme steigert, wenn selbst erzeugte Energie überhaupt oder oberhalb einer bestimmten Menge zur Verfügung steht, und/oder dass es seine Energieaufnahme verringert oder konstant hält, wenn selbst erzeugte Energie nicht oder nur unterhalb einer bestimmten Menge zur Verfügung steht.

2. System nach Anspruch 1, **dadurch gekennzeichnet, dass** das System des Weiteren wenigstens einen Speicher aufweist, der im Haushalt erzeugte Energie speichert, und dass die Steuereinheit derart ausgeführt ist, dass sie die Information enthält, ob und/oder in welcher Menge diese Energie in dem Speicher vorhanden ist.

3. System nach einem der vorhergehenden Ansprüche, **dadurch gekennzeichnet, dass** das Kühl- und/oder Gefriergerät seine Energieaufnahme durch Absenkung des Einschaltwertes und/oder des Ausschaltwertes erhöht und/oder durch Erhöhung des Einschaltwertes und/oder des Ausschaltwertes verringert, wobei vorzugsweise vorgesehen ist, dass das Ausmaß der Absenkung und/oder der Erhöhung des Einschaltwertes und/oder des Ausschaltwertes vorbestimmt ist oder von dem Wert des Signals abhängt, das die Steuereinheit an das Kühl- und/oder Gefriergerät übermittelt.

4. System nach Anspruch 3, **dadurch gekennzeichnet, dass** die Absenkung und/oder die Erhöhung des Einschaltwertes und/oder des Ausschaltwertes in einem Schritt oder sukzessive, d.h. in mehreren Schritten erfolgt, wobei die mehreren Schritte eine identische oder eine abnehmende oder eine zunehmende Größe aufweisen können.

5. System nach einem der vorhergehenden Ansprüche, **dadurch gekennzeichnet, dass** Mittel, insbesondere eine Regelungseinheit des Kühl- und/oder Gefriergerätes vorgesehen sind, mittels derer die Menge der gespeicherten Kälte anhand der Dauer der Kältespeicherung ermittelbar ist.

6. System nach Anspruch 5 und einem der Ansprüche 3 oder 4, **dadurch gekennzeichnet, dass** die Erhöhung des Einschaltwertes und/oder des Ausschaltwertes von der Menge der gespeicherten Kälte abhängt.

7. System nach einem der Ansprüche 3 bis 6, **dadurch gekennzeichnet, dass** die Erhöhung und/oder Absenkung des Einschaltwertes und/oder des Ausschaltwertes derart erfolgt, dass ein maximaler Einschaltwert und/oder ein minimaler Ausschaltwert nicht überschritten bzw. unterschritten wird.

8. System nach einem der vorhergehenden Ansprüche, **dadurch gekennzeichnet, dass** das Kühl- und/oder Gefriergerät derart ausgeführt ist, dass es eine Erhöhung der Energieaufnahme durch eine vorzugsweise zeitgesteuerte Betriebsphase des Kälteaggregates des Gerätes mit einer anschließenden vorzugsweise zeitgesteuerten Ruhephase umsetzt, wobei vorzugsweise vorgesehen ist, dass die Dauer einer Ruhephase anhand der gespeicherten Kältemenge bestimmt wird.

9. System nach einem der vorhergehenden Ansprüche, **dadurch gekennzeichnet, dass** Wiedergabemittel vorgesehen sind, mittels derer das Vorhandensein vorhandener bzw. überschüssiger und/oder fehlender selbst erzeugter Energie und/oder deren Menge und/oder der momentane Betriebsstatus und/oder der Wert des Signals und/oder einer oder mehrerer daraus abgeleiteter Größen, der Verbindungsstatus zur Signalquelle und/oder die Energiekosten und/oder die Kosteneinsparung durch Nutzung selbst erzeugter Energie und/oder der CO₂-Ausstoss oder die CO₂-Einsparung wiedergebbar ist, wobei vorzugsweise vorgesehen ist, dass die Wiedergabemittel derart ausgeführt sind, dass die mittels der Wiedergabemittel angezeigten Daten als Absolutwerte oder als prozentuale Werte angezeigt werden und/oder dass die Ausgabe der Daten mittels der Wiedergabemittel akustisch und/oder optisch erfolgt.

10. System nach Anspruch 9, **dadurch gekennzeichnet, dass** die Wiedergabemittel derart ausgeführt sind, dass die Daten mittels eines oder mehrerer Symbole und/oder Kontrollleuchten wiedergegeben werden, wobei vorzugsweise vorgesehen ist, dass ein Betriebsstatus durch dauerhafte An- oder Abschaltung oder durch ein Blinken, vorzugsweise mit vom Betriebsstatus abhängiger Frequenz des oder der Symbole oder Kontrollleuchten angezeigt wird.

11. System nach einem der vorhergehenden Ansprüche, **dadurch gekennzeichnet, dass** das Kühl- und/oder Gefriergerät sowie die Steuereinheit derart ausgeführt sind, dass eine bidirektionale Kommunikation zwischen dem Kühl- und/oder Gefriergerät sowie der Steuereinheit durchführbar ist.

12. System nach einem der vorhergehenden Ansprüche, **dadurch gekennzeichnet, dass** das Kühl- und/oder Gefriergerät derart ausgeführt ist, dass es der Steuereinheit meldet, wenn und/oder wann nur eingeschränkte oder gar keine Reaktionen auf seitens der Steuereinheit empfangenen Signale möglich sind.

## Claims

1. A system, comprising:
means for generating energy in a household,
a refrigeration and/or freezer device, as well as
a control unit, which is or can be connected with the refrigeration and/or freezer device in a wired or wireless manner such that a signal can be transmitted from the control unit to the refrigeration and/or freezer device, wherein
the control unit is configured in such a way that a signal can be transmitted to the refrigeration and/or freezer device by means of the control unit,
**characterized in that**
the signal contains information whether and/or to which extent energy generated in the household is available,
the refrigeration and/or freezer device is configured in such a way that it adjusts its energy consumption dependent upon this signal, and
the refrigeration and/or freezer device is configured in such a way that it increases its energy consumption if self-generated energy is available at all or above a certain amount, and/or that it reduces its energy consumption or keeps it constant if self-generated energy is not available or only below a certain amount.

2. The system according to claim 1, **characterized in that** the system further comprises at least one accumulator, which accumulates energy generated in the household, and that the control device is configured in such a way that it contains information if and/or to which amount said energy is present in the accumulator.

3. The system according to one of the preceding claims, **characterized in that** the refrigeration and/or freezer device increases its energy consumption by lowering the turn-on value and/or the turn-off value and/or reduces it by increasing the turn-on value and/or the turn-off value, wherein it is preferably provided that the extent of increase and/or decrease of the turn-on value and/or the turn-off value is predetermined or depends on the value of the signal, which the control unit transmits to the refrigeration and/or freezer device.

4. The system according to claim 3, **characterized in that** the lowering and/or increasing of the turn-on value and/or the turn-off value is effected in one step or successively, i.e. in multiple steps, wherein the multiple steps can have an identical or a decreasing or an increasing size.

5. The system according to one of the preceding claims, **characterized in that** means, in particular a regulating unit of the refrigeration and/or freezer device, are provided, by means of which the amount of the accumulated cold can be determined based upon the duration of the cold accumulation.

6. The system according to claim 5 and one of claims 3 or 4, **characterized in that** increasing the turn-on value and/or the turn-off value depends on the amount of accumulated cold.

7. The system according to one of claims 3 to 6, **characterized in that** the increase and/or decrease of the turn-on value and/or the turn-off value is effected in such a way that a minimum turn-on value and/or a minimum turn-off value is not exceeded or fallen below.

8. The system according to one of the preceding claims, **characterized in that** the refrigeration and/or freezer device is formed in such way that it implements an increase in energy consumption by means of a preferably time-controlled operating period of the chiller unit of the device with a subsequent, preferably time-controlled rest period, wherein it is preferably provided that the duration of a rest period is determined based upon the amount of the accumulated cold.

9. The system according to one of the preceding claims, **characterized in that** reproduction means are provided, by means of which the presence of available or excessive and/or missing self-generated energy, and/or the amount and/or the current operating state thereof and/or the value of the signal and/or of one or more parameters derived therefrom, the connecting state to the signal source and/or the energy costs and/or the cost savings by the self-generated energy and/or the CO₂ emission or the CO₂ reduction can be displayed, wherein it is preferably provided that the reproduction means are configured in such a way that the data displayed by means of the reproduction means is displayed as absolute values or percentage values, and/or that the output of the data is effected acoustically and/or optically by means of the reproduction means.

10. The system according to claim 9, **characterized in that** the reproduction means are formed in such a way that data is reproduced by means of one or multiple symbols and/or control lights, wherein it is preferably provided that an operating state is indicated by constant turn-on or turn-off or by flashing, preferably with a frequency dependent upon the operating state of the symbol(s) or control lights.

11. The system according to one of the preceding claims, **characterized in that** the refrigeration and/or freezer device as well as the control unit are formed in such a way that a bidirectional communication can be performed between the refrigeration and/or freezer device and the control unit.

12. The system according to one of the preceding claims, **characterized in that** the refrigeration and/or freezer device is formed in such a way that it notifies the control unit if and/or when reactions to signals received on the side the control unit are possible to a limited extent or not possible at all.

## Revendications

1. Système comprenant :
un moyen pour produire de l'énergie dans un ménage,
un appareil de refroidissement et/ou de congélation, ainsi
qu'une unité de commande, qui est reliée ou peut être reliée, avec ou sans fil, à l'appareil de refroidissement et/ou de congélation de telle sorte qu'un signal peut être transmis depuis l'unité de commande à l'appareil de refroidissement et/ou de congélation, l'unité de commande étant conçue de sorte à pouvoir transmettre un signal à l'appareil de refroidissement et/ou de congélation,
**caractérisé en ce que**
le signal contient l'information si et/ou dans quelle mesure l'énergie produite dans le ménage est disponible,
**en ce que** l'appareil de refroidissement et/ou de congélation est conçu de telle sorte qu'il ajuste de consommer de l'énergie en fonction de ce signal, et
**en ce que** l'appareil de refroidissement et/ou de congélation est conçu de telle sorte qu'il augmente sa consommation d'énergie lorsque de l'énergie autoproduite est disponible en général ou au-dessus d'une certaine quantité, et/ou qu'il réduit ou maintient à un niveau constant sa consommation d'énergie lorsqu'aucune énergie autoproduite n'est disponible ou seulement en-dessous d'une certaine quantité.

2. Système selon la revendication 1, **caractérisé en ce que** le système par ailleurs comporte un réservoir qui accumule l'énergie produite dans le ménage et **en ce que** l'unité de commande est conçue de telle sorte qu'elle contient l'information si et/ou en quelle quantité cette énergie est disponible dans le réservoir.

3. Système selon l'une quelconque des revendications précédentes, **caractérisé en ce que** l'appareil de refroidissement et/ou de congélation augmente sa consommation d'énergie en abaissant la valeur d'activation et/ou en augmentant la valeur de désactivation et/ou en augmentant la valeur d'activation et/ou en réduisant la valeur de désactivation, dans lequel il est idéalement prévu que l'ampleur de l'abaissement et/ou de l'augmentation de la valeur d'activation et/ou de la valeur de désactivation est prédéterminée ou dépend de la valeur du signal que l'unité de commande transmet à l'appareil de refroidissement et/ou de congélation.

4. Système selon la revendication 3, **caractérisé en ce que** l'abaissement et/ou l'augmentation du seuil d'activation et/ou du seuil de désactivation a lieu en une étape ou de manière successive, c'est-à-dire en plusieurs étapes, les différentes étapes pouvant présenter une magnitude identique, décroissante ou croissante.

5. Système selon l'une quelconque des revendications précédentes, **caractérisé en ce que** des moyens, en particulier une unité de régulation de l'appareil de refroidissement et/ou de congélation est prévue à l'aide de laquelle la quantité de froid accumulée peut être déterminée en se basant sur la durée du stockage du froid.

6. Système selon la revendication 5 et l'une des revendications 3 ou 4, **caractérisé en ce que** l'augmentation de la valeur d'activation et/ou de la valeur de désactivation dépend de la quantité de froid stockée.

7. Système selon l'une quelconque des revendications 3 à 6, **caractérisé en ce que** l'augmentation et/ou l'abaissement du seuil d'activation et/ou du seuil de désactivation se produit de telle sorte qu'une valeur d'activation maximale et/ou une valeur de désactivation minimale n'est dépassé ni par le haut ou ni par le bas.

8. Système selon l'une quelconque des revendications précédentes, **caractérisé en ce que** l'appareil de refroidissement et/ou de congélation est conçu de telle sorte qu'il met en oeuvre une augmentation de la consommation d'énergie au moyen d'une phase opérationnelle de préférence commandée temporisée de l'unité de réfrigération suivie d'une phase de repos de préférence commandée temporisée, dans lequel il est préférablement prévu que la durée d'une phase de repos est déterminée à l'aide de la quantité de froid stockée.

9. Système selon l'une quelconque des revendications précédentes, **caractérisé en ce que** des moyens de reproduction sont prévus au moyen desquels la présence d'une énergie autoproduite disponible ou excédentaire et/ou absente et/ou sa quantité et/ou le statut de fonctionnement actuel et/ou la valeur du signal et/ou une ou plusieurs grandeurs déduites de celle-ci, l'état de liaison avec la source de signaux et/ou les frais d'énergie et/ou les économies d'énergie grâce à l'utilisation d'énergie autoproduite et/ou les émissions de CO₂ ou la réduction de CO₂ peuvent être indiqués, étant entendu qu'il est préférablement prévu que les données indiquées à l'aide des moyens de reproduction sont affichées sous forme de valeurs absolues ou de pourcentages et/ou que la sortie des données se fait de manière acoustique et/ou optique à l'aide des moyens de reproduction.

10. Système selon la revendication 9, **caractérisé en ce que** les moyens de reproduction sont conçus de telle sorte que les données sont restituées au moyen d'un ou plusieurs symboles et/ou de voyants, étant entendu qu'il est préférablement prévu qu'un état de fonctionnement est indiqué par une activation ou désactivation permanente ou par un clignotement, idéalement avec une fréquence dépendante de l'état de fonctionnement du ou des symboles ou voyants.

11. Système selon l'une quelconque des revendications précédentes, **caractérisé en ce que** l'appareil de refroidissement et/ou de congélation ainsi que l'unité de commande sont conçus de telle sorte qu'une communication bidirectionnelle peut s'effectuer entre l'appareil de refroidissement et/ou de congélation d'une part et l'unité de commande d'autre part.

12. Système selon l'une quelconque des revendications précédentes, **caractérisé en ce que** l'appareil de refroidissement et/ou de congélation est conçu de telle sorte qu'il signale à l'unité de commande si et/ou quand des réactions limitées voire nulles aux signaux reçus de l'unité de commande sont possibles.
